# EUROPEAN PATENT SPECIFICATION

(11) **EP 2 631 964 B1**
(45) Date of publication and mention of the grant of the patent: **04.01.2017**
(21) Application number: 12382064.9
(22) Date of filing: 22.02.2012
(51) Int. Cl.: H01M 2/10

(54) **Module for forming battery packs**
Modul zum Formen von Batteriepacks
Module destiné à former des blocs-batteries

(43) Date of publication of application: 28.08.2013
(73) Proprietor: Fico Triad, S.A., 08028 Barcelona (ES)
(72) Inventor: Nieto Cavia, Laura, E-08290 Cerdanyola del Vallès - Barcelona (ES); Buisan Ferrer, Josep, E-08290 Cerdanyola del Vallès - Barcelona (ES)
(74) Representative: ABG Patentes, S.L.

(56) References cited:
- EP-A1- 1 069 631
- EP-A1- 1 780 825
- US-A1- 2011 244 283

## Description

### Object of the Invention

The present invention is aimed at a module for forming battery packs that can be connected to one another such that the battery resulting from the attachment of several modules provides at its terminals the potential resulting from a series connection without the modules concatenated in series necessarily having to be aligned.

These modules are also characterized by a particular type of quick-connect attachment which allows the mechanical attachment between modules in turn establishing electrical communication between electrical conductor tracks.

### Background of the Invention

In recent years electric drive vehicles have been developed because electric motors do not emit gaseous pollutants, their performance is very high and the noise level is also considerably lower. The power supply in these vehicles is either a generator driven by a combustion engine running at optimal speed, this is the case of hybrid vehicles, or a rechargeable battery. Even in the first case the electric power generated is stored in a battery.

Batteries used in vehicles are quite bulky because sufficient storage is required so that the vehicle has certain autonomy allowing it to be competitive against more traditional drive means based on internal combustion engines.

Space requirements in different types of vehicles are quite different. Manufacturing batteries of different sizes for different vehicles increase manufacturing costs and complicate production lines in order to adapt them to a plurality of different configurations.

Batteries formed by storage cell packing are known wherein the packing is what is adapted to the space available and assigned for the battery in the vehicle. This set of cells is internally connected so that the combination, duly connected in series, provides suitable potential. Connecting groups of cells connected in series wherein these groups are arranged in parallel in order to be capable of storing a larger amount of power and for the power to be available at the required potential is also possible.

Nevertheless, in batteries of this type, even though the same type of cells continues to be used, the casing of the battery and the connection between cells is particular to each battery so different vehicles still require a manufacturing process suited to each battery model.

The present invention solves this problem by providing a module which allows a quick series connection in which the modules connected in series are not necessarily aligned. After this connection between modules, a battery is provided that is suited to a configuration of the housing available in the vehicle without needing to individually connect the cells and wherein the series connection does not stipulate an aligned arrangement of the modules forming the series connection.

### Description of the Invention

The present invention comprises a module with a particular configuration that solves the technical problem raised above. The module according to invention makes use of rod-shaped power storage cells with terminals at their ends, linked between two plates, and with connections making the cells of each module being arranged in series and with the entry and exit in the same plate.

After attaching two modules through the edges of the plates, they are suitably connected such that the cells of the two modules are connected in series. If a third module is added to this series attachment between two modules, this third module does not necessarily have to be connected in an aligned manner, but can be attached at the edge, forming an L-shaped series connection. This change in trajectory in the attachment pattern between modules allows configuring batteries formed by a plurality of modules in which the trajectory of the series connection between modules follows a straight, zigzag or U-shaped trajectory to arrange both ends of the series attachment as close as possible; and all these arrangements merely being examples of attachments that do not necessarily result in rectangular base prism-shaped batteries.

To achieve these objectives, the module according to a first aspect of the invention comprises:
- a first plate and a second plate arranged parallel to one another and showing four edges also arranged parallel to one another, wherein each of the plates comprises:
   o a first edge,
   o a second edge adjacent to the first edge and arranged to its right,
   o a third edge arranged opposite the first edge; and
   o a fourth edge adjacent to the first edge and arranged to its left, wherein the third edge is adjacent to the second edge and is also adjacent to the fourth edge,
   wherein the first, second, third and fourth edges of the first plate further correspond with the first, second, third and fourth edges of the second plate,

The module is comprised between two parallel plates identified as first and second plate. The cells where power is stored will be housed between these plates. These plates have four edges giving the module the outer appearance in the form of a square or rectangular base prism. The attachment between modules is through the edges hence it is necessary to identify each of the edges and its position relative to one another.
- an even number of rod-shaped cells with a positive terminal (+) at one end and a negative terminal (-) at the opposite end, all arranged parallel to one another and placed between the first plate and the second plate, and linked to them through the terminals,
   The electrical connection between modules is established in one of the plates. Given that the cells which are used are rod-shaped with a positive terminal (+) at one end and a negative terminal (-) at the opposite end, it is necessary to use an even number of cells so that, when linking the cells in series in twos, the cells thus connected in series will have the entry and exit on the same plate. The greater the number of cells per module arranged in series, the greater the potential provided by the same module.
- a set of electrical connections in the first plate between terminals of cells attached to said first plate and a set of connections in the second plate between terminals of cells attached to said second plate such that they establish a series connection of the cells,
   The rod-shaped cells are linked at their ends to both plates such that they are placed in the space between plates. The plates have electrical connections. In the first plate these electrical connections allow the electrical connection between modules but there can also be electrical connections which allow linking terminals of cells to establish the series chain between all the cells of the module resulting in the series connection.
   This is the case of the embodiment that will be described wherein each module has four cells. In this particular case, it will be seen that the plate first has electrical connections in the form of tracks allowing the intermediate connection of the series sequence; and others linking the final ends of the series sequence.
   The second plate only has electrical connections resulting in the series connection by concatenating cells.
- a first electrical connection terminal centrally arranged in the first edge of the first plate and a second electrical connection terminal centrally arranged in the second edge of the first plate, wherein both electrical connection terminals are electrically communicated with a terminal (+, -) of the end cell of the series connection; and
- a third electrical connection terminal centrally arranged in the third edge of the first plate and a fourth electrical connection terminal centrally arranged in the fourth edge of the first plate, wherein both electrical connection terminals are electrically communicated with the terminal (+, -) of the opposite cell of the end of the series connection; and
   each of the edges of the first plate has a centrally arranged terminal. This arrangement allows there to always be two facing terminals when attaching modules through two edges Additionally, the terminals are grouped in twos, taking two adjacent terminals, such that these two adjacent terminals have the same polarity; and the other two adjacent terminals arranged in the opposite edges have opposite polarity. This configuration combined with the selection of polarities allows combining modules which, suitably attached, allow following a concatenated sequence of modules that are not necessarily aligned. The sequence can follow a straight trajectory or turn at a right angle to the right or left.
   The group of cells connected in series within the module polarize the terminals corresponding to terminal (+) or (-) of the module.
- wherein the first, second, third and fourth electrical connection terminals of the first plate are suitable for being connected with the terminals of an edge of the first plate of another module also arranged parallel and adjacent thereto.

As already indicated, the modules are attached through the edges arranging the adjacent modules to one another. Although it would be possible to have screwed attachments, for example using metal parts screwed into both adjacent terminals in order to communicate them with one another, one embodiment uses a solution allowing the simultaneous mechanical attachment and electrical connection such that the rotation for tightening the screws tightens one module against another simultaneously.

Particular solutions associated with ways of carrying out the invention will be described in the detailed description of the invention section.

### Description of the Drawings

These and other features and advantages of the invention will become more clearly defined from the following detailed description of a preferred embodiment given only by way of illustrative and non-limiting example with reference to the attached drawings.
Figure 1 shows a perspective view of a module according to one embodiment with the plates seen as being transparent so as to allow showing the cells and connection tracks therein. The same figure shows the connection of the first and second plate.
Figures 2a and 2b show an elevational view of the first plate and second plate, showing the fixing points of the cells, the connection terminals, and the tracks with the connections they establish, all for the embodiment shown in Figure 1.
Figure 3 shows an exploded perspective view of the first plate to show the sandwich configuration with the tracks arranged between two parts.
Figures 4a and 4b show a fixing element in the open and closed position particularly designed for the quick connection of the terminals of the cells to the first and second plate.
Figures 5a, 5b and 5c show the different positions of both the cell and the quick-connect fixing element in the insertion and fixing of the cell to the plate to result in the module.
Figure 6 shows an attachment between two modules allowing the extraction of the module without requiring the extraction of the remaining modules.
Figures 7a, 7b and 7c show different examples of attachments of modules according to the embodiment resulting in batteries with different sizes and ways of combining the modules.
Figure 8a and 8b show the solution of covering the modules to result in a closed battery casing.
Figure 9 shows an embodiment of a module with a sensor detecting the state of the cells.

### Detailed Description of the Invention

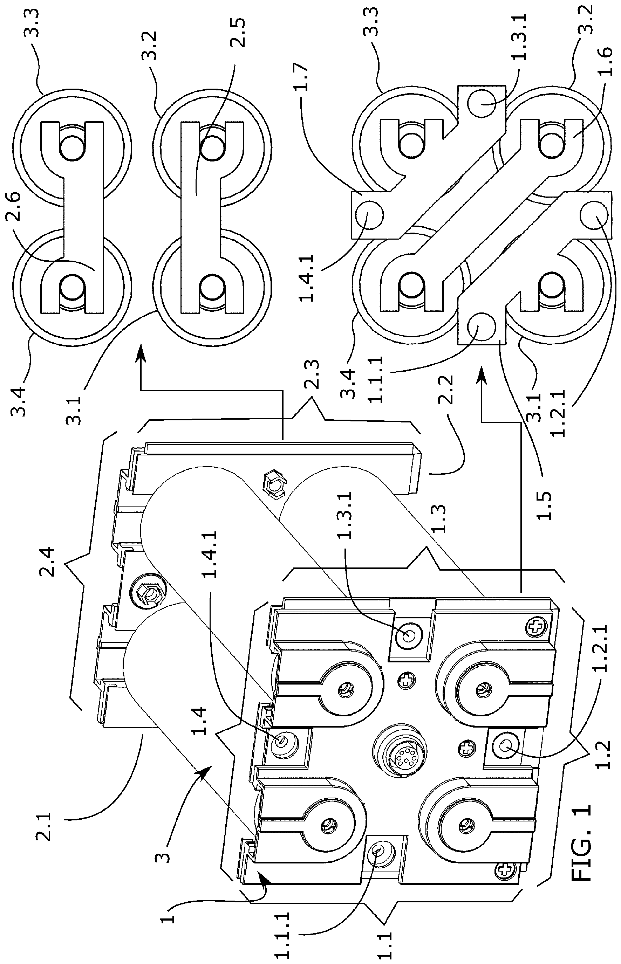

An embodiment of the invention will be described in this section using modules made up of four cells (3). Figure 1 shows a perspective view of a single module formed by two essentially square plates (1, 2) arranged parallel to one another such that the cells (3) are placed between the plates (1, 2).

The cells (3) are rod-shaped such that the positive (+) and negative (-) terminals are arranged at the ends and in opposition.

In this embodiment, the first plate (1) is linked to the four cells (3) by means of a quick-connect attachment to the ends of the four cells (3) which will be described below, and in this embodiment the opposite ends of the four cells (3) are also attached to the second plate (2) by means of quick-connect attachments.

The four cells (3) form two rows and two columns slightly spaced from one another to allow the passage of air which allows cooling the cells (3). The cells (3) are spaced from one another and spaced from the edges of the plates (1) according to a front elevation so that when the modules are attached to form a battery, they continue to leave a space between cells (3) of contiguous modules.

With the orientation shown in Figure 1, the cells (3) forming the column on the left are oriented with the positive terminal (+) towards the front or first plate (1) and the cells (3) forming the column on the right are oriented with the negative terminal (-) towards the front or first plate (1).

With this orientation, the first edge (1.1, 2.1) of both the first plate (1) and of the second plate (2) is located to the left, the second edge (1.2, 2.2) is located down below, the third edge (1.3, 2.3) is located to the right; and the fourth edge (1.4, 2.4) is located up top.

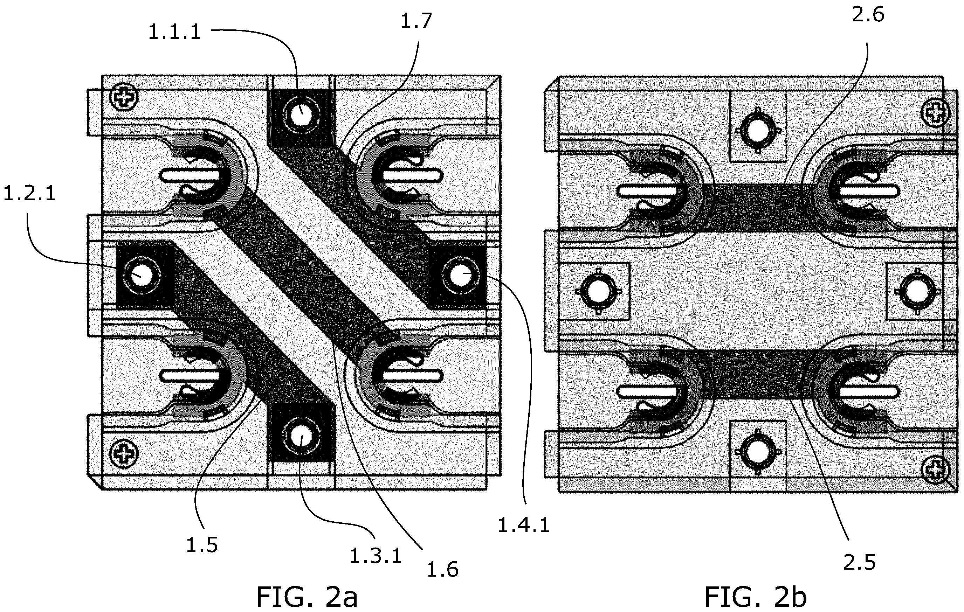

The same Figure 1 shows the four terminals (1.1.1, 1.2.1, 1.3.1, 1.4.1) centrally arranged in each edge in the first plate (1), and it also shows the corresponding terminals (2.1.1, 2.2.1, 2.3.1, 2.4.1) in the second plate (2). Both these terminals and the connections linking the terminals (1.1.1, 1.2.1, 1.3.1, 1.4.1, 2.1.1, 2.2.1, 2.3.1, 2.4.1) and the terminals of the cells (3) are shown in greater detail to the right of Figure 1 and in Figures 2a and 2b.

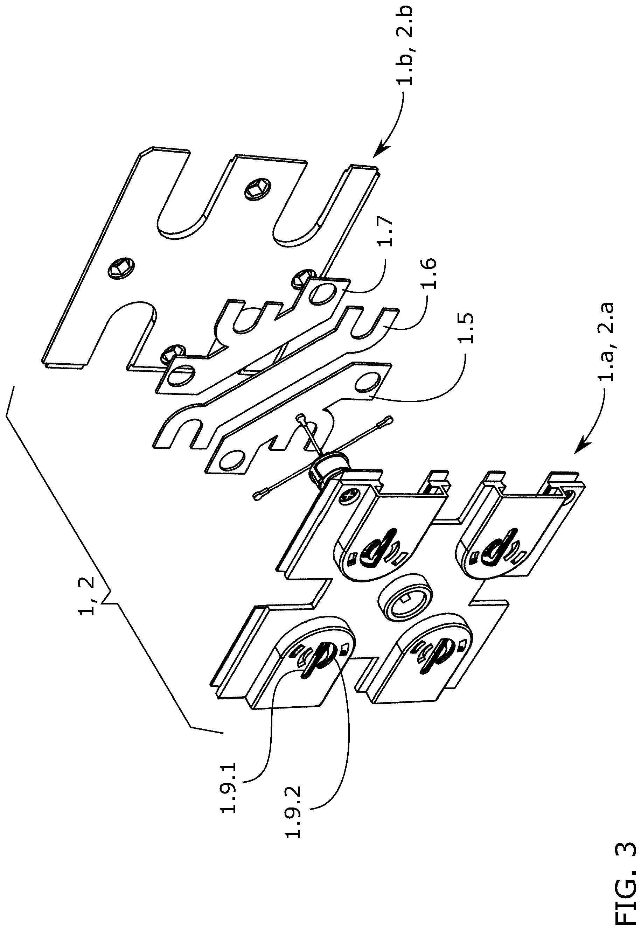

The connections between adjacent modules are established between terminals (1.1.1, 1.2.1, 1.3.1, 1.4.1) centrally arranged in each edge (1.1, 1.2, 1.3, 1.4). Terminals (1.1.1, 1.2.1, 1.3.1, 1.4.1) and the terminals of the cells (3) are communicated in this embodiment by means of electrical connections (1.5, 1.6, 1.7, 2.6, 2.7) configured by way of metal tracks arranged between two intermediate parts (see Figure 3). These tracks or electrical connections (1.5, 1.6, 1.7, 2.6, 2.7) are configured so that:
- the connection between the four cells (3) is in series,
- the terminals (1.1.1, 1.2.1) of the first plate (1) with a positive (+) polarity are to the left and down below; and
- the terminals (1.3.1, 1.4.1) of the first plate (1) with negative (-)polarity are to the right and up top.

To obtain this series sequence, Figure 2a shows how the metal track or electrical connection (1.5) linking the first and second terminal (1.1.1, 1.2.1) is also electrically connected with the positive terminal of the cell (3) arranged to the left and down below. The opposite negative terminal (-) of this same cell (3) is communicated with the rear terminal of the lower right cell (3) through a metal track or electrical connection (2.5) of the second plate (2). Again referring to the first plate (1), the front negative terminal (-) of this latter cell (3) is in an electrical connection (1.6) with the positive terminal of the upper left cell (3). As with the lower row, the upper row of cells (3) is also communicated in the rear part such that the left cell (3) is communicated with the upper right cell (3). The front negative terminal (-) of this fourth cell (3), the upper right one, polarizes the right and upper terminals (1.3.1, 1.4.1), completing the series configuration of the four cells (3).

In this particular case, the second plate (2) also has four boreholes in the area where there are terminals (1.1.1, 1.2.1, 1.3.1, 1.4.1) in the first plate (1), but it simply serves for the mechanical attachment between modules so that two adjacent modules are attached by both the first plate (1) and by the second plate (2).

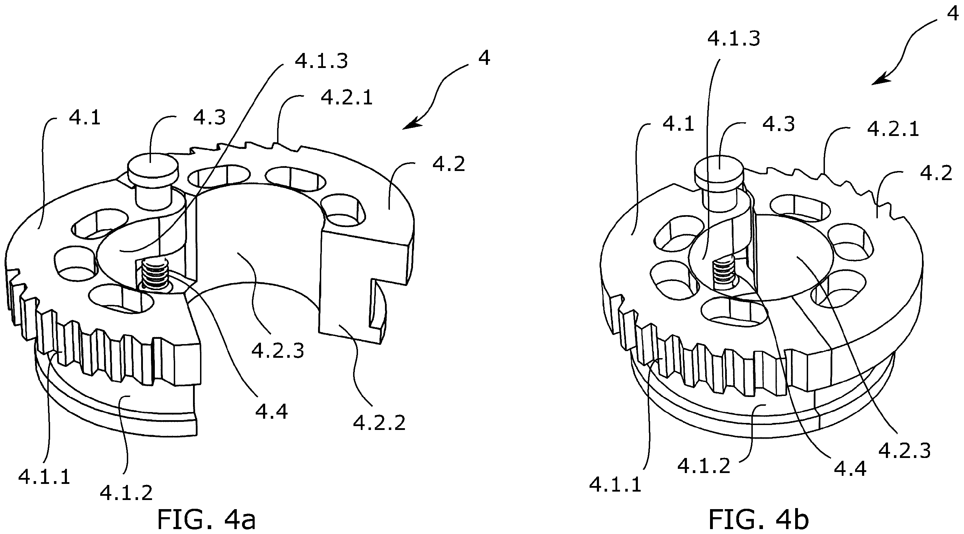

Figure 3 shows a sandwich configuration of the first plate (1). The first plate (1) is formed by two intermediate parts preferably made of plastic between which the metal tracks resulting in the electrical connections (1.5, 1.6, 1.7) are intercalated. This structure is reproduced in the second plate (2) except the tracks are two in number and arranged horizontally parallel to link the terminals of the cells (3) by rows. The metal tracks acting as electrical connections (1.5, 1.6, 1.7) show a borehole for attachments with terminals (1.1.1, 1.2.1, 1.3.1, 1.4.1), and a U-shaped termination for connections with the terminals of the cells (3). This U-shape collaborates with a quick-connect part (4) described supported by Figures 4a and 4b.

This quick-connect part (4) allows the assembly and disassembly of the cells (3) by dissociating them from the first and second plates (1, 2). The cells (3) show cylindrical rod-shaped terminals at their ends. The quick-connect part (4) is an intermediate part receiving the entry of a terminal of the cell (3), entering with it in a housing, and simultaneously achieving the fixing and electrical connection with the metal tracks ending in a U-shape.

The quick-connect part (4) comprises two half parts (4.1, 4.2) attached by a pin (4.3) about which they are hinged. In this same pin (4.3) there is a spring (4.4) providing bias to keep the two half parts (4.1, 4.2) open, leaving two accessible inner cylindrical sectors (4.1.3, 4.2.3) intended for receiving the cylindrical-shaped terminal of the cell (3). If the terminal of the cell (3) was anything other than cylindrical-shaped, the inner cylindrical sectors (4.1.3, 4.2.3) would have an antagonist configuration suitable for receiving the terminals.

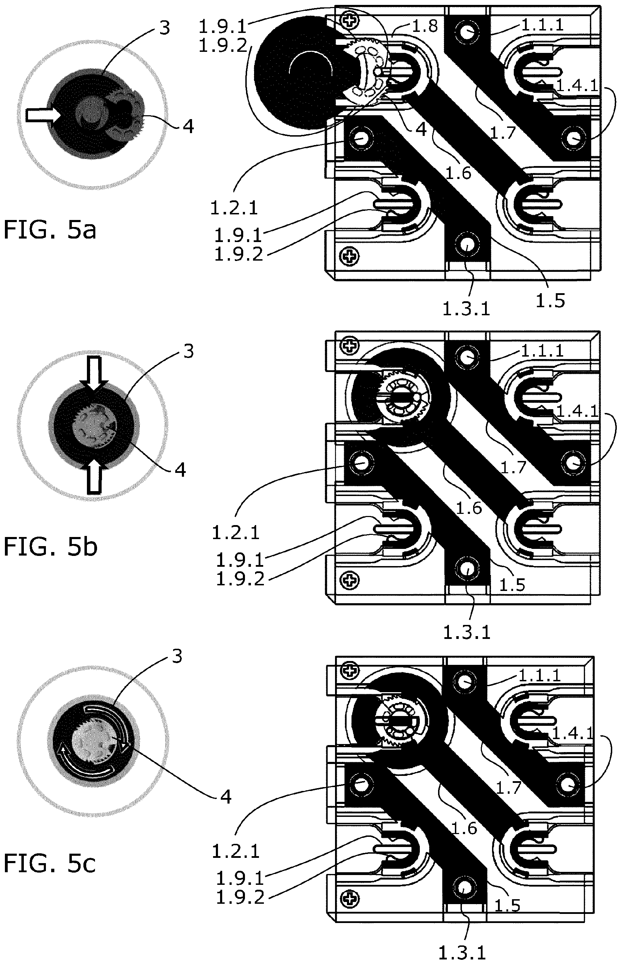

Each of these half parts (4.1, 4.2) externally has teeth (4.1.1, 4.2.1) and a perimetral groove (4.1.2, 4.2.2) serving as a guide as will be described below with the aid of Figures 5a-5c

.

The same Figures 4a and 4b show the same quick-connect part (4) in an open and closed position. The closed position is closed overcoming the force of the spring (4.4), and it can be seen how the surfaces in the inner cylindrical sector (4.1.3, 4.2.3) forma a cylindrical surface suitable for surrounding the cylindrical terminal of the cell (3).

Using Figures 5a, 5b and 5c, the sequence of the entry and fixing of the cell (3) in the housings of the plates (1, 2) in which it is mechanically anchored and electrically linked, establishing an electrical connection between the terminals and the electric tracks reaching the housing of the terminal, is observed.

To introduce the cell (3) in its housing there is a quick-connect part (4) suitable for receiving the terminal of the cell (3). The quick-connect part (4) shows bias due to the force of the spring (4.4) to remain open.

Figure 5a shows a U-shaped entry guide (1.8) in which the ends of the U-shape allow sliding entry of the quick-connect part (4) in its open position. The sliding of the quick-connect part (4) is possible as a result of the collaboration of the entry guide (1.8) with the perimetral groove (4.1.2, 4.2.2) of the quick-connect part (4). The introduction of the terminal of the cell (3) reaches the inner part of the quick-connect part (4) driving its entry towards the bottom of the U-shape.

The sliding of the quick-connect part (4) according to the direction of symmetry of the U-shape is assured by a grooved guide (1.9) configured in a first straight section (1.9.1) and in a second curved section (1.9.2). This grooved guide (1.9) is suitable for allowing the sliding of a prolongation of the pin (4.3) which is housed in the grooved guide (1.9). This first movement goes along the first straight section (1.9.1) of the grooved guide (1.9).

At an intermediate point of the entry guide (1.8) there is a restriction in the width of the U-shape forcing the closure of the quick-connect part (4) due to the effect of the force of entry of the terminal housed therein. This restriction overcomes the force of the spring (4.4) and closes the quick-connect part (4), leaving the terminal surrounded by the two crescents (4.1, 4.2). This is the position that can be seen in Figure 5b.

The outer teeth (4.1.1, 4.1.2) of the two crescents (4.1, 4.2) have the same orientation in this particular case, favoring the rotation inside in the circular section of the bottom of the U-shape in a single direction. This rotation is possible because the first straight section (1.9.1) of the grooved guide (1.9) extends in a second curved section (1.9.2) such that the rotation of the cell (3) drags the quick-connect part (4) surrounding its terminal, and the latter in turn slides, rotating with the pin (4.3) through the second curved section (1.9.2) of the grooved guide (1.9).

The cell (3) is mechanically anchored in this final position, and the terminal is simultaneously electrically communicated with the quick-connect part (4) which is in turn electrically communicated with the metal track ending in a U- or C-shape coinciding with the U-shaped housing arranged in the plate (1, 2) that received the terminal of the cell (3).

Once the cells (3) have been introduced and fixed between the plates (1, 2) following the suitable polarity, four in this embodiment, a module that can be attached to more modules to form a battery is provided.

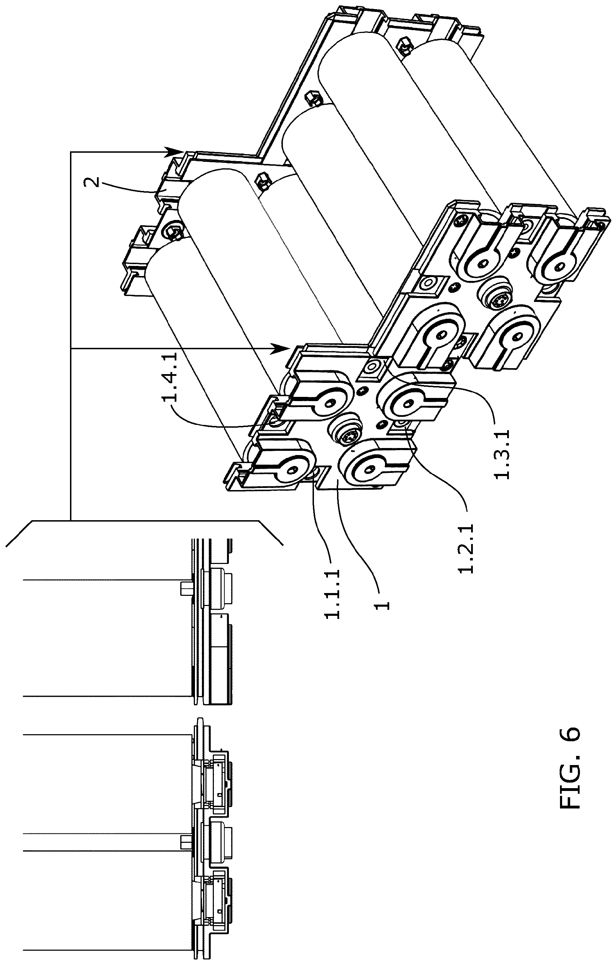

This embodiment uses a configuration that allows changing or replacing a single module without having to disassemble the remaining modules. As shown in Figure 6, the plates (1, 2) have tongue and grooving, allowing the relative sliding between the edges (1.1, 1.2, 1.3, 1.4). It can be seen in Figure 6 that the module on the left allows vertical movement (according to the orientation of the figure) such that if this module is located between two more modules forming an alignment of modules, it is possible to extract it to perform maintenance tasks for example.

Once the modules are arranged adjacent to one another, matching up the terminals to be connected to form a series concatenation of modules, the mechanical and electrical connection is established between terminals (1.1.1, 1.2.1, 1.3.1, 1.4.1).

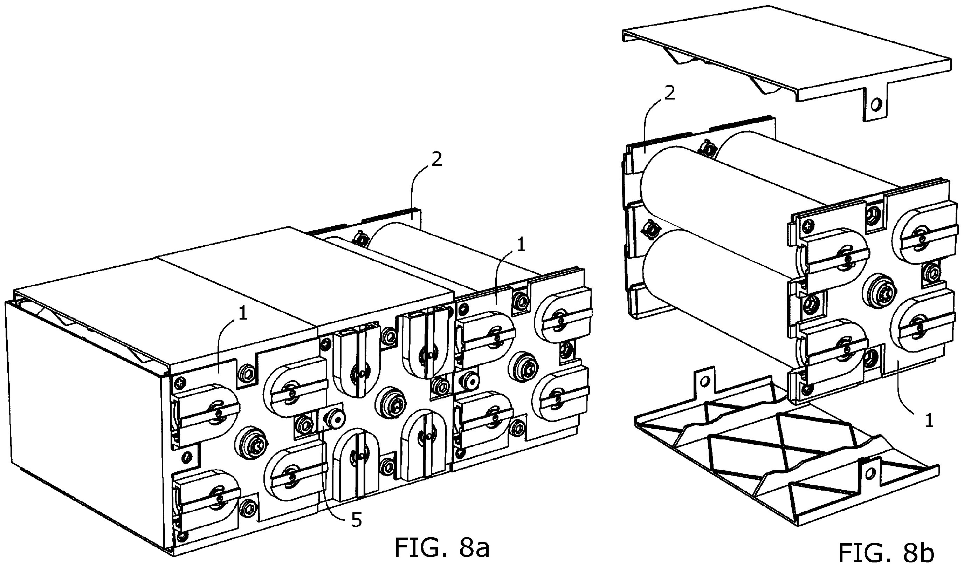

This embodiment uses metal plates (5) (see Figure 8) with two boreholes, one borehole allowing the screwed attachment to a terminal (1.1.1, 1.2.1, 1.3.1, 1.4.1) and the other borehole allowing the screwed attachment to the adjacent terminal of the module coinciding at the edge. This attachment is mechanical due to the two screwed attachments collaborating with the tongue and grooving, and electrical because the terminals (1.1.1, 1.2.1, 1.3.1, 1.4.1) are electrically communicated through the metal plate.

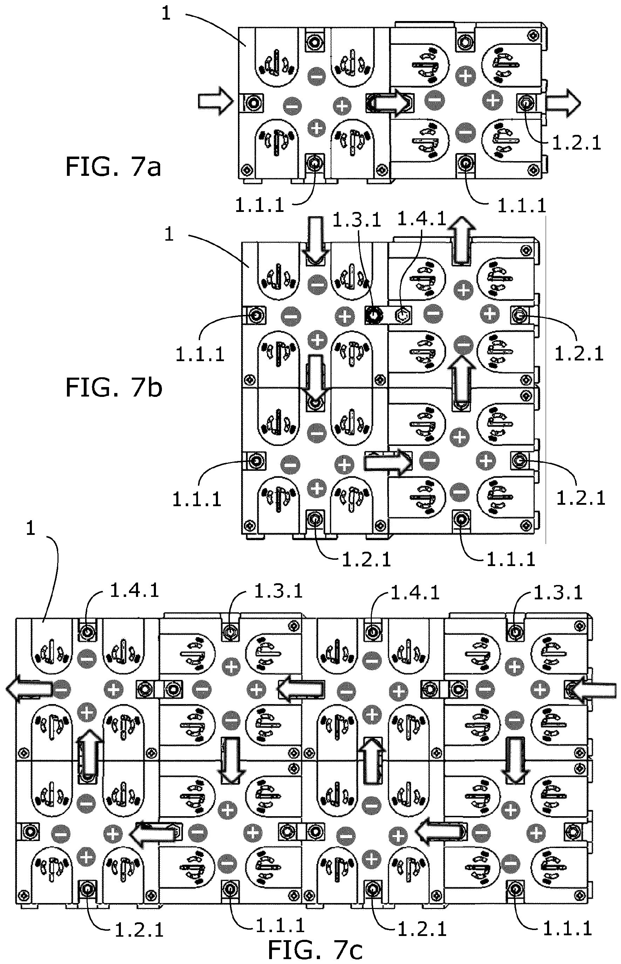

Figure 7a shows two modules arranged adjacent to one another attached through two of their terminals. The module on the left provides a terminal with positive polarity (+) and the module shown to the right provides a terminal with negative polarity (-). The battery formed by these two modules will have the negative terminal (-) linked with any of the negatives terminals of the module on the left, for example the one shown with the large arrow on the left, and it will have its positive terminal (+) linked with any of the positives terminals of the module on the right, for example the one shown with the large arrow on the right.

It is possible to change the trajectory of the concatenated module sequence by increasing the number of modules, given that there is more than one positive and negative terminal. Figure 7b shows an example in which four modules are attached forming a square configuration with the entry and exit of the series attachment on the same side of the square. The terminals of the battery can be close to the same side of the square of the packing formed by the four modules. Each module must be suitably oriented so that the connection between terminals is negative to positive, as shown by the arrows. The inner configuration of the cells (3) and the tracks assure that the inner cells (3) are suitably connected so that they are also in turn attached in series.

Figure 7c shows another alternative in which the terminals of the battery formed by a plurality of modules are located at opposite ends of the packing, and despite the fact that the packing is formed by two rows, the series connections use all the modules because they can be connected in zigzag.

Figure 8 is an embodiment in which the boreholes of the terminals not used also serve for incorporating a packing closure plate resulting in a complete and protected battery.

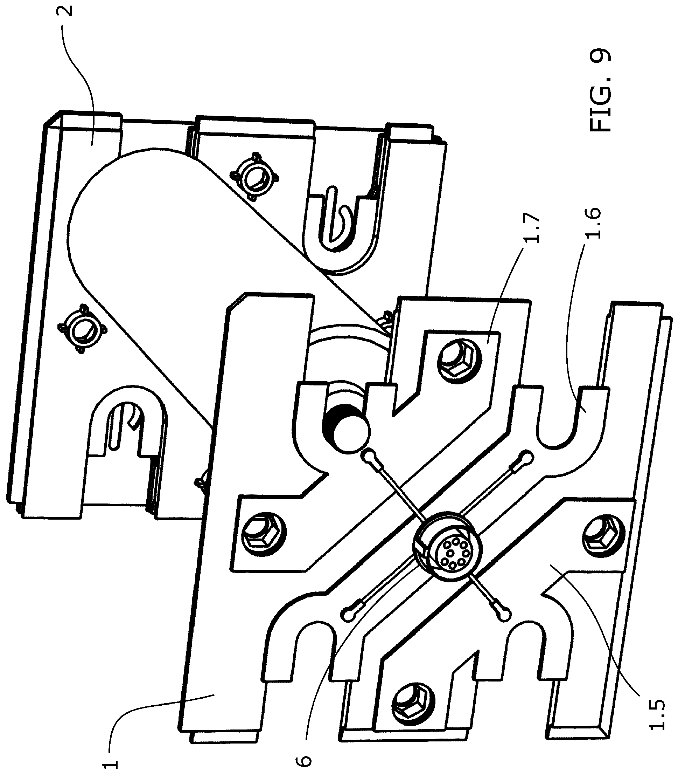

Figure 9 is an embodiment using a sensor (6) controlling the state of the set of cells (3) concerning temperature and voltage drop. In this example a sensor (6) placed in the center of the first plate (1) having several signal inputs to measure more than one parameter has been used. The sensor (6) controls the voltage drop in the cells (3.1, 3.2, 3.3, 3.4), the relative temperature between them or both variables by means of riveted attachments of the entries arranged in the metal tracks resulting in the electrical connections (1.5, 1.6, 1.7).

## Claims

1. A module for forming battery packs comprising:
• a first plate (1) and a second plate (2) arranged parallel to one another and showing four edges also arranged parallel to one another, wherein each of the plates (1, 2) is square- or rectangular-shaped and comprises:
∘ a first edge (1.1, 2.1),
∘ a second edge (1.2, 2.2) adjacent to the first edge (1.1, 2.1) and arranged to its right,
∘ a third edge (1.3, 2.3) arranged opposite the first edge (1.1, 2.1); and
∘ a fourth edge (1.4, 2.4) adjacent to the first edge (1.1, 2.1) and arranged to its left, wherein the third edge (1.3, 2.3) is adjacent to the second edge (1.2, 2.2) and is also adjacent to the fourth edge (1.4, 2.4), wherein the first, second, third and fourth edges (1.1, 1.2, 1.3, 1.4) of the first plate (1) further correspond with the first, second, third and fourth edges (2.1, 2.2, 2.3, 2.4) of the second plate (2),
• an even number of rod-shaped cells (3) with a positive terminal (+) at one end and a negative terminal (-) at the opposite end, all arranged parallel to one another and placed between the first plate (1) and the second plate (2), and linked to them through the terminals,
• a set of electrical connections in the first plate (1) between the terminals of cells (3) attached to said first plate (1) and a set of connections in the second plate (2) between terminals of cells (3) attached to said second plate (2) such that they establish a series connection of the cells (3),
• a first electrical connection terminal (1.1.1) centrally arranged in the first edge (1.1) of the first plate (1) and a second electrical connection terminal (1.2.1) centrally arranged in the second edge (1.2) of the first plate (1), wherein both electrical connection terminals (1.1.1, 1.2.1) are electrically communicated with a terminal (+, -) of the end cell (3) of the series connection; and
• a third electrical connection terminal (1.3.1) centrally arranged in the third edge (1.3) of the first plate (1) and a fourth electrical connection terminal (1.4.1) centrally arranged in the fourth edge (1.4) of the first plate (1), wherein both electrical connection terminals (1.3.1, 1.4.1) are electrically communicated with the terminal (+, -) of the opposite cell (3) of the end of the series connection; and
• wherein the first, second, third and fourth electrical connection terminals (1.1.1, 1.2.1, 1.3.1, 1.4.1) of the first plate (1) are suitable for being connected with the terminals of an edge (1.1, 1.2, 1.3, 1.4) of the first plate (1) of another module also arranged parallel and adjacent thereto.

2. The module according to claim 1, **characterized in that** it has four cells (3) parallel to one another with their terminals distributed in the main plane of each plate (1, 2):
• a first cell (3.1) in which its terminals are located in correspondence with the vertex of the first and second edge (1.1, 1.2; 2.1, 2.2),
• a second cell (3.2) in which its terminals are located in correspondence with the vertex of the second and third edge (1.2, 1.3; 2.2, 2.3),
• a third cell (3.3) in which its terminals are located in correspondence with the vertex of the third and fourth edge (1.3, 1.4; 2.3, 2.4); and
• a fourth cell (3.4) in which its terminals are located in correspondence with the vertex of the fourth and first edge (1.4, 1.1; 2.4, 2.1),
and wherein:
• the first and fourth cell (3.1, 3.4) are oriented with the positive terminal (+) towards the first plate (1) and the second and third cell (3.2, 3.3) are oriented with the negative terminal (-) towards the first plate (1),
• the first plate (1) comprises:
∘ a first electrical connection (1.5) electrically connecting the first electrical connection terminal (1.1.1), the second electrical connection terminal (1.2.1) and the positive terminal (+) of the first cell (3.1),
∘ a second electrical connection (1.6) electrically connecting the positive terminal (+) of the fourth cell (3.4) and the negative terminal (-) of the second cell (3.2),
∘ a third electrical connection (1.7) electrically connecting the third electrical connection terminal (1.3.1), the fourth electrical connection terminal (1.4.1) and the negative terminal (-) of the third cell (3.3),
• the second plate (2) comprises:
∘ a fourth electrical connection (2.5) electrically connecting the negative terminal (-) of the first cell (3.1) and the positive terminal (+) of the second cell (3.2),
∘ a fifth electrical connection (2.6) electrically connecting the negative terminal (-) of the fourth cell (3.4) and the positive terminal (+) of the third cell (3.3).

3. The module according to claim 1 or 2, **characterized in that** the edges (1.1, 1.2, 1.3, 1.4, 2.1, 2.2, 2.3, 2.4) comprise fixing means suitable for fixing two modules arranged adjacent to one another.

4. The module according to any of the preceding claims, **characterized in that** the first plate (1), the second plate (2) or both (1, 2) comprise two essentially planar elements (1.a, 1.b, 2.a, 2.b) between which the electrical connections are placed.

5. The module according to claim 4, **characterized in that** the electrical connections are planar tracks.

6. The module according to any of the preceding claims, **characterized in that** the attachment between the cell (3) and each of the plates (1, 2) of the module through the end terminals of the cell (3) comprises in each plate (1, 2):
• a U-shaped entry guide (1.8) suitable for allowing the entry and housing of a part by means of sliding according to the direction established by the axis of symmetry of the U-shape,
• a quick-connect part (4) configured according to two half parts (4.1, 4.2) attached and hinged through a pin (4.3) resulting in a C-shaped part with the capacity to close around the terminal of the cell (3), wherein this quick-connect part (4) has an outer guide (4.1.2, 4.2.2) in each of the half parts (4.1, 4.2) configured to slide into the entry guide (1.8) of the plate (1, 2),
• a termination of an electrical connection (1.5, 1.6, 1.7, 2.5, 2.6) suitable for contacting with the quick-connect part (4) once the latter is housed in the entry guide (1.8),
• means for blocking the quick-connect part (4) suitable for maintaining it after receiving the termination of the terminal.

7. The module according to claim 6, **characterized in that** the plate (1, 2) comprises a grooved guide (1.9) with at least one straight section (1.9.1) cooperating with a projection, preferably a prolongation of the pin (4.3) attaching the two half parts (4.1, 4.2), to guide the sliding of the quick-connect part (4) while sliding the terminal of the cell (3) into the entry.

8. The module according to claim 6 or 7, **characterized in that** the means for blocking the quick-connect part (4) comprise:
• fixing teeth (4.1.1, 4.2.1) arranged in the outer part of at least one of the half parts (4.1, 4.2) suitable for retaining the rotation against the plate (1, 2),
• a curved-section prolongation (1.9.2) of the grooved guide (1.9) after the end of the straight section (1.9.1) suitable for allowing the rotation of the quick-connect part (4) after being fully inserted into the U-shape.

9. The module according to any of claims 6 to 8, **characterized in that** the quick-connect part (4) comprises a spring (4.4) suitable for providing the bias for keeping the two half parts (4.1, 4.2) open.

10. The module according to any of claims 6 to 9, **characterized in that** the U-shaped entry guide (1.8) suitable for allowing the entry and housing of the quick-connect part (4) comprises a taper configured to cause the closure of the two half parts (4.1, 4.2) of the quick connection (4) when it is inserted towards the bottom of the U-shape.

11. The module according to any of claims 1 to 9, **characterized in that** it comprises at least one sensor (6) controlling the state of the set of cells (3); i.e., the temperature, the voltage drop or both.

12. A battery comprising a plurality of modules according to any of the preceding claims connected to one another in series.

## Patentansprüche

1. Modul zum Bilden von Batteriepacks, umfassend:
• eine erste Platte (1) und eine zweite Platte (2), die parallel zueinander angeordnet sind und vier ebenfalls parallel zueinander angeordnete Ränder zeigen, wobei jede der Platten (1, 2) von quadratischer oder rechteckiger Form ist und umfasst:
∘ einen ersten Rand (1.1, 2.1),
∘ einen zweiten Rand (1.2, 2.2), der benachbart zu dem ersten Rand (1.1, 2.1) und rechts davon angeordnet ist,
∘ einen dritten Rand (1.3, 2.3), der gegenüber dem ersten Rand (1.1, 2.1) angeordnet ist; und
∘ einen vierten Rand (1.4, 2.4), der benachbart zu dem ersten Rand (1.1, 2.1) und links davon angeordnet ist, wobei der dritte Rand (1.3, 2.3) benachbart zu dem zweiten Rand (1.2, 2.2) und ebenfalls benachbart zu dem vierten Rand (1.4, 2.4) ist,
wobei der erste, zweite, dritte und vierte Rand (1.1, 1.2, 1.3, 1.4) der ersten Platte (1) weiterhin dem ersten, zweiten, dritten und vierten Rand (2.1, 2.2, 2.3, 2.4) der zweiten Platte (2) entsprechen,
• eine gerade Anzahl von stabförmigen Zellen (3) mit einer Plusklemme (+) an einem Ende und einer Minusklemme (-) an dem entgegengesetzten Ende, wobei alle parallel zueinander angeordnet und zwischen die erste Platte (1) und die zweite Platte (2) gesetzt und durch die Klemmen mit ihnen verbunden sind,
• einen Satz von elektrischen Anschlüssen in der ersten Platte (1) zwischen den Klemmen der Zellen (3), die an der ersten Platte (1) angebracht sind, und einen Satz von Anschlüssen in der zweiten Platte (2) zwischen Klemmen von Zellen (3), die an der zweiten Platte angebracht sind, so dass sie eine Reihenschaltung der Zellen (3) herstellen,
• eine erste elektrische Anschlussklemme (1.1.1), die in dem ersten Rand (1.1) der ersten Platte (1) mittig angeordnet ist, und eine zweite elektrische Anschlussklemme (1.2.1), die in dem zweiten Rand (1.2) der ersten Platte (1) mittig angeordnet ist,
wobei beide elektrischen Anschlussklemmen (1.1.1, 1.2.1) mit einer Klemme (+, -) der Endzelle (3) der Reihenschaltung in elektrischer Verbindung stehen; und
• eine dritte elektrische Anschlussklemme (1.3.1), die in dem dritten Rand (1.3) der ersten Platte (1) mittig angeordnet ist, und eine vierte elektrische Anschlussklemme (1.4.1), die in dem vierten Rand (1.4) der ersten Platte (1) mittig angeordnet ist, wobei beide elektrischen Anschlussklemmen (1.3.1, 1.4.1) mit der Klemme (+, -) der gegenüberliegenden Zelle (3) des Endes der Reihenschaltung in elektrischer Verbindung stehen; und
• wobei die erste, zweite, dritte und vierte elektrische Anschlussklemme (1.1.1, 1.2.1, 1.3.1, 1.4.1) der ersten Platte (1) zum Verbinden mit den Klemmen eines Rands (1.1, 1.2, 1.3, 1.4) der ersten Platte (1) eines anderen Moduls, der ebenfalls parallel und benachbart dazu angeordnet ist, geeignet sind.

2. Modul nach Anspruch 1, **dadurch gekennzeichnet, dass** es vier zueinander parallele Zellen (3) aufweist, wobei deren Klemmen in der Hauptebene jeder Platte (1, 2) verteilt sind:
• eine erste Zelle (3.1), wobei deren Klemmen in Übereinstimmung mit dem Eckpunkt des ersten und zweiten Rands (1.1, 1.2; 2.1, 2.2) positioniert sind,
• eine zweite Zelle (3.2), wobei deren Klemmen in Übereinstimmung mit dem Eckpunkt des zweiten und dritten Rands (1.2, 1.3; 2.2, 2.3) positioniert sind,
• eine dritte Zelle (3.3), wobei deren Klemmen in Übereinstimmung mit dem Eckpunkt des dritten und vierten Rands (1.3, 1.4; 2.3, 2.4) positioniert sind; und
• eine vierte Zelle (3.4), wobei deren Klemmen in Übereinstimmung mit dem Eckpunkt des vierten und ersten Rands (1.4, 1.1; 2.4, 2.1) positioniert sind,
und wobei:
• die erste und die vierte Zelle (3.1, 3.4) mit der Plusklemme (+) hin zur ersten Platte (1) ausgerichtet sind und die zweite und dritte Zelle (3.2, 3.3) mit der Minusklemme (-) hin zur ersten Platte (1) ausgerichtet sind,
• die erste Platte (1) umfasst:
∘ einen ersten elektrischen Anschluss (1.5), der die erste elektrische Anschlussklemme (1.1.1), die zweite elektrische Anschlussklemme (1.2.1) und die Plusklemme (+) der ersten Zelle (3.1) elektrisch verbindet,
∘ einen zweiten elektrischen Anschluss (1.6), der die Plusklemme (+) der vierten Zelle (3.4) und die Minusklemme (-) der zweiten Zelle (3.2) elektrisch verbindet,
∘ einen dritten elektrischen Anschluss (1.7), der die dritte elektrische Anschlussklemme (1.3.1), die vierte elektrische Anschlussklemme (1.4.1) und die Minusklemme (-) der dritten Zelle (3.3) elektrisch verbindet,
• die zweite Platte (2) umfasst:
∘ einen vierten elektrischen Anschluss (2.5), der die Minusklemme (-) der ersten Zelle (3.1) und die Plusklemme (+) der zweiten Zelle (3.2) elektrisch verbindet,
∘ einen fünften elektrischen Anschluss (2.6), der die Minusklemme (-) der vierten Zelle (3.4) und die Plusklemme (+) der dritten Zelle (3.3) elektrisch verbindet.

3. Modul nach Anspruch 1 oder 2, **dadurch gekennzeichnet, dass** die Ränder (1.1, 1.2, 1.3, 1.4, 2.1, 2.2, 2.3, 2.4) Befestigungsmittel umfassen, die zum Befestigen von zwei zueinander benachbart angeordneten Modulen geeignet sind.

4. Modul nach einem der vorhergehenden Ansprüche, **dadurch gekennzeichnet, dass** die erste Platte (1), die zweite Platte (2) oder beide (1, 2) zwei im Wesentlichen ebene Elemente (1.a, 1.b, 2.a, 2.b) umfassen, zwischen welche die elektrischen Anschlüsse gesetzt sind.

5. Modul nach Anspruch 4, **dadurch gekennzeichnet, dass** die elektrischen Anschlüsse ebene Bahnen sind.

6. Modul nach einem der vorhergehenden Ansprüche, **dadurch gekennzeichnet, dass** die Anbringung zwischen der Zelle (3) und jeder der Platten (1, 2) des Moduls durch die Endklemmen der Zelle (3) in jeder Platte (1, 2) umfasst:
• eine U-förmige Einlassführung (1.8), die zum Ermöglichen des Einlassens und Aufnehmens eines Teils mittels Gleiten gemäß der durch die Symmetrieachse der U-Form hergestellten Richtung geeignet ist,
• einen Schnellkopplungsteil (4), der gemäß zwei halben Teilen (4.1, 4.2), die durch einen Stift (4.3) angebracht und schwenkbar gelagert sind, ausgelegt ist, was einen C-förmigen Teil mit der Fähigkeit ergibt, die Klemme der Zelle (3) zu umschließen, wobei dieser Schnellkopplungsteil (4) eine äußere Führung (4.1.2, 4.2.2) in jedem der halben Teile (4.1, 4.2) aufweist, die ausgelegt ist, um in die Einlassführung (1.8) der Platte (1, 2) zu gleiten,
• einen Endenabschluss eines elektrischen Anschlusses (1.5, 1.6, 1.7, 2.5, 2.6), der zum Kontaktieren mit dem Schnellkopplungsteil (4), sobald der Letztere in der Einlassführung (1.8) aufgenommen ist, geeignet ist,
• Mittel zum Blockieren des Schnellkopplungsteils (4), die zu dessen Beibehalten nach Aufnehmen des Endenabschlusses der Klemme geeignet sind.

7. Modul nach Anspruch 6, **dadurch gekennzeichnet, dass** die Platte (1, 2) eine gerillte Führung (1.9) mit mindestens einem geraden Abschnitt (1.9.1) umfasst, die mit einem Vorsprung, bevorzugt einer Verlängerung des Stifts (4.3) zusammenwirkt, der die zwei halben Teile (4.1, 4.2) anbringt, um das Gleiten des Schnellkopplungsteils (4) während eines Gleitens der Klemme der Zelle (3) in den Einlass zu führen.

8. Modul nach Anspruch 6 oder 7, **dadurch gekennzeichnet, dass** die Mittel zum Blockieren des Schnellkopplungsteils (4) umfassen:
• Befestigungszähne (4.1.1, 4.2.1), die in dem äußeren Teil mindestens eines der halben Teile (4.1, 4.2) angeordnet sind, die zum Halten der Drehung gegen die Platte (1, 2) geeignet sind,
• eine Verlängerung in Form eines gebogenen Abschnitts (1.9.2) der gerillten Führung (1.9) nach dem Ende des geraden Abschnitts (1.9.1), die zum Zulassen der Drehung des Schnellkopplungsteils (4) nach vollständigen Einführen in die U-Form geeignet ist.

9. Modul nach einem der Ansprüche 6 bis 8, **dadurch gekennzeichnet, dass** der Schnellkopplungsteil (4) eine Feder (4.4) umfasst, die zum Vorsehen der Vorspannung zum Offenhalten der zwei halben Teile (4.1, 4.2) geeignet ist.

10. Modul nach einem der Ansprüche 6 bis 9, **dadurch gekennzeichnet, dass** die U-förmige Einlassführung (1.8), die zum Zulassen des Einführens und Aufnehmens des Schnellkopplungsteils (4) geeignet ist, eine Verjüngung umfasst, die ausgelegt ist, um das Schließen der zwei halben Teile (4.1, 4.2) der Schnellkopplung (4) zu bewirken, wenn sie hin zum Boden der U-Form eingeführt wird.

11. Modul nach einem der Ansprüche 1 bis 9, **dadurch gekennzeichnet, dass** sie mindestens einen Sensor (6) umfasst, der den Zustand des Satzes von Zellen (3), d.h. die Temperatur, den Spannungsabfall oder beide, steuert.

12. Batterie mit mehreren Modulen nach einem der vorhergehenden Ansprüche, die miteinander in Reihe geschaltet sind.

## Revendications

1. Module destiné à former des blocs de batterie, comprenant:
• une première plaque (1) et une seconde plaque (2) agencées parallèlement l'une à l'autre et présentant quatre bords également agencés parallèlement les uns aux autres, dans lequel chacune des plaques (1, 2) est de forme carrée ou rectangulaire et comprend:
∘ un premier bord (1.1, 2.1),
∘ un deuxième bord (1.2, 2.2) adjacent au premier bord (1.1, 2.1) et agencé à sa droite,
∘ un troisième bord (1.3, 2.3) agencé à l'opposé du premier bord (1.1, 2.1), et
∘ un quatrième bord (1.4, 2.4) adjacent au premier bord (1.1, 2.1) et agencé à sa gauche, dans lequel le troisième bord (1.3, 2.3) est adjacent au deuxième bord (1.2, 2.2) et est également adjacent au quatrième bord (1.4,2.4),
dans lequel les premier, deuxième, troisième et quatrième bords (1.1, 1.2, 1.3, 1.4) de la première plaque (1) correspondent en outre aux premier, deuxième, troisième et quatrième bords (2.1, 2.2, 2.3, 2.4) de la seconde plaque (2),
• un nombre pair de cellules en forme de barreaux (3) avec une borne positive (+) à une extrémité et une borne négative (-) à l'extrémité opposée, toutes agencées parallèlement les unes aux autres et placées entre la première plaque (1) et la seconde plaque (2), et reliées à elles par l'intermédiaire des bornes,
• un ensemble de connexions électriques dans la première plaque (1) entre des bornes des cellules (3) reliées à ladite première plaque (1) et un ensemble de connexions dans la seconde plaque (2) entre des bornes des cellules (3) reliées à ladite seconde plaque (2) de telle sorte qu'elles établissent un raccordement en série des cellules (3),
• une première borne de connexion électrique (1.1.1) agencée centralement dans le premier bord (1.1) de la première plaque (1) et une deuxième borne de connexion électrique (1.2.1) agencée centralement dans le deuxième bord (1.2) de la première plaque (1), dans lequel les deux bornes de connexion électrique (1.1.1, 1.2.1) sont électriquement en communication avec une borne (+, -) de la cellule d'extrémité (3) du raccordement en série, et
• une troisième borne de connexion électrique (1.3.1) agencée centralement dans le troisième bord (1.3) de la première plaque (1) et une quatrième borne de connexion électrique (1.4.1) agencée centralement dans le quatrième bord (1.4) de la première plaque (1), dans lequel les deux bornes de connexion électrique (1.3.1, 1.4.1) sont électriquement en communication avec la borne (+, -) de la cellule opposée (3) de l'extrémité du raccordement en série, et
• dans lequel les première, deuxième, troisième et quatrième bornes de connexion électrique (1.1.1, 1.2.1, 1.3.1, 1.4.1) de la première plaque (1) sont adaptées pour être raccordées aux bornes d'un bord (1.1, 1.2, 1.3, 1.4) de la première plaque (1) d'un autre module également agencé parallèlement à ceux-ci et adjacent à celles-ci.

2. Module selon la revendication 1, **caractérisé en ce qu'**il a quatre cellules (3) parallèles les unes aux autres avec leurs bornes réparties dans le plan principal de chaque plaque (1, 2) :
• une première cellule (3.1) dans laquelle ses bornes sont placées en correspondance avec le sommet des premier et deuxième bords (1.1, 1.2 ; 2.1, 2.2),
• une deuxième cellule (3.2) dans laquelle ses bornes sont placées en correspondance avec le sommet des deuxième et troisième bords (1.2, 1.3 ; 2.2, 2.3),
• une troisième cellule (3.3) dans laquelle ses bornes sont placées en correspondance avec le sommet des troisième et quatrième bords (1.3, 1.4 ; 2.3, 2.4), et
• une quatrième cellule (3.4) dans laquelle ses bornes sont placées en correspondance avec le sommet des quatrième et premier bords (1.4, 1.1 ; 2.4, 2.1),
et dans lequel :
• les première et quatrième cellules (3.1, 3.4) sont orientées avec la borne positive (+) vers la première plaque (1) et les deuxième et troisième cellules (3.2, 3.3) sont orientées avec la borne négative (-) vers la première plaque (1),
• la première plaque (1) comprend:
∘ une première connexion électrique (1.5) reliant électriquement la première borne de connexion électrique (1.1.1), la deuxième borne de connexion électrique (1.2.1) et la borne positive (+) de la première cellule (3.1),
∘ une deuxième connexion électrique (1.6) reliant électriquement la borne positive (+) de la quatrième cellule (3.4) et la borne négative (-) de la deuxième cellule (3.2),
∘ une troisième connexion électrique (1.7) reliant électriquement la troisième borne de connexion électrique (1.3.1), la quatrième borne de connexion électrique (1.4.1) et la borne négative (-) de la troisième cellule (3.3),
• la deuxième plaque (2) comprend:
∘ une quatrième connexion électrique (2.5) reliant électriquement la borne négative (-) de la première cellule (3.1) et la borne positive (+) de la deuxième cellule (3.2),
∘ une cinquième connexion électrique (2.6) reliant électriquement la borne négative (-) de la quatrième cellule (3.4) et la borne positive (+) de la troisième cellule (3.3).

3. Module selon la revendication 1 ou 2, **caractérisé en ce que** les bords (1.1, 1.2, 1.3, 1.4, 2.1, 2.2, 2.3, 2.4) comprennent des moyens de fixation adaptés pour fixer deux modules agencés adjacents l'un à l'autre.

4. Module selon l'une quelconque des revendications précédentes, **caractérisé en ce que** la première plaque (1), la seconde plaque (2) ou les deux (1, 2) comprennent deux éléments sensiblement plans (1.a, 1.b, 2.a, 2.b) entre lesquels les connexions électriques sont placées.

5. Module selon la revendication 4, **caractérisé en ce que** les connexions électriques sont des pistes planes.

6. Module selon l'une quelconque des revendications précédentes, **caractérisé en ce que** la fixation entre la cellule (3) et chacune des plaques (1, 2) du module à travers les bornes d'extrémité de la cellule (3) comporte dans chaque plaque (1, 2):
• un guide d'entrée en forme de U (1.8) adapté pour permettre l'entrée et la réception d'une partie au moyen d'un coulissement en fonction de la direction établie par l'axe de symétrie de la forme en U,
• une pièce de raccordement rapide (4) configurée en fonction de deux demies pièces (4.1, 4.2) reliées et pivotant par l'intermédiaire d'une goupille (4.3), le résultat étant une pièce en forme de C ayant la capacité de se fermer autour de la borne de la cellule (3), dans lequel cette pièce de raccordement rapide (4) a un guide extérieur (4.1.2, 4.2.2) dans chacune des demies pièces (4.1, 4.2) configuré pour coulisser dans le guide d'entrée (1.8) de la plaque (1, 2),
• une terminaison d'une connexion électrique (1.5, 1.6, 1.7, 2.5, 2.6) adaptée pour venir en contact avec la pièce de raccordement rapide (4) une fois que cette dernière est reçue dans le guide d'entrée (1.8),
• des moyens pour bloquer la pièce de raccordement rapide (4) adaptés pour la maintenir après réception de la terminaison de la borne.

7. Module selon la revendication 6, **caractérisé en ce que** la plaque (1, 2) comprend un guide rainuré (1.9) avec au moins une portion droite (1.9.1) coopérant avec une saillie, de préférence un prolongement de la goupille (4.3) reliant les deux demies pièces (4.1, 4.2), pour guider le coulissement de la pièce de raccordement rapide (4) tout en faisant coulisser la borne de la cellule (3) dans l'entrée.

8. Module selon la revendication 6 ou 7, **caractérisé en ce que** les moyens de blocage de la pièce de raccordement rapide (4) comprennent:
• des dents de fixation (4.1.1, 4.2.1) agencées dans la partie extérieure d'au moins une des demies pièces (4.1, 4.2) adaptées pour empêcher la rotation contre la plaque (1, 2),
• un prolongement de portion courbe (1.9.2) du guide rainuré (1.9) après l'extrémité de la portion droite (1.9.1) adapté pour permettre la rotation de la pièce de raccordement rapide (4) après avoir été entièrement inséré dans la forme en U.

9. Module selon l'une quelconque des revendications 6 à 8, **caractérisé en ce que** la pièce de raccordement rapide (4) comprend un ressort (4.4) adapté pour assurer le rappel pour maintenir les deux demies pièces (4.1, 4.2) ouvertes.

10. Module selon l'une quelconque des revendications 6 à 9, **caractérisé en ce que** le guide d'entrée en forme de U (1.8) adapté pour permettre l'entrée et la réception de la pièce de raccordement rapide (4) comprend un cône configuré pour entraîner la fermeture des deux demies pièces (4.1, 4.2) du raccordement rapide (4) lorsqu'il est inséré vers le fond de la forme en U.

11. Module selon l'une quelconque des revendications 1 à 9, **caractérisé en ce qu'**il comprend au moins un capteur (6) commandant l'état de l'ensemble des cellules (3), c'est-à-dire la température, la chute de tension ou les deux.

12. Batterie comprenant une pluralité de modules selon l'une quelconque des revendications précédentes raccordés les uns aux autres en série.
